Europäisches Patentamt

European Patent Office

Office européen des brevets

(11) Publication number: **0 257 641**
**A2**

# EUROPEAN PATENT APPLICATION

(21) Application number: 87112445.9

(22) Date of filing: 27.08.87

(51) Int. Cl.⁴: **G06F 15/20**

(30) Priority: 28.08.86 JP 202871/86
28.08.86 JP 202872/86

(43) Date of publication of application:
**02.03.88 Bulletin 88/09**

(84) Designated Contracting States:
**DE FR GB**

(71) Applicant: **SHARP KABUSHIKI KAISHA**
**22-22 Nagaike-cho Abeno-ku**
**Osaka 545(JP)**

(72) Inventor: **Saito, Keizo**
**8-7-8, Nagamodai Kamo-cho**
**Souraku-gun Kyoto-fu(JP)**

(74) Representative: **Selting, Günther, Dipl.-Ing. et**
**al**
**Deichmannhaus am Hauptbahnhof**
**D-5000 Köln 1(DE)**

(54) **Documentation machine with spelling correction feature.**

(57) A documentation machine with a spelling correction feature which includes an input device (1) for inputting the spelling of an input word, a dictionary device (4) for storing the spelling of a plurality of words, which is responsive to the input device (1) to output the spelling of the input word, and a correct table for storing with relation one or more possibly erroneous letters inputted and the correct spelling of the input word. The correct table is operated to output a correct candidate of the spelling by conducting a correction procedure including replacement and/or addition of one or more letters of the input word for an unknown spelling of the input word.

*Fig. 1*

## DOCUMENTATION MACHINE WITH SPELLING CORRECTION FEATURE

### BACKGROUND OF THE INVENTION

The present invention relates to a documentation machine or European language processing machine with a spelling correction feature.

Conventionally, in the documentation machine such as computer systems, word processor devices, typewriter devices, etc., dealing with information by words in European languages, for example, in English, there is normally provided a dictionary in order to check whether or not the input English words or the like are free from errors. Moreover, at present, there has been further added another function to provide candidates for correct words at the side of the system, besides the function for merely indicating incorrectly spelled words. For the above purpose, a practice most frequently employed at the current stage is a combination of the following four processings, but even by such practice, correct words are only available at an accuracy in the order of 80% statistically.

(1) 1 character substitution: Ex. stataon to station (Replacement of a by i)

(2) 1 character deletion: Ex. statioon to station (Deletion of 1 character o)

(3) 1 character addition: Ex. staton to station (Addition of i between t and o)

(4) Neighboring character inversion: Ex. statre to stater (Inversion of re to er)

Incidentally, in the past, although input of European language words such as English words is mostly effected by a keyboard while an operator is watching an original document, it has been a recent trend that the way of data input is changing, for example, in such a manner that data of printing types are directly inputted through employment of an OCR (optical character reader) or the like. Therefore, in the classification of spelling errors which may take place, percentage of errors formed by wrong recognition of words closely resembling each other in the spelling has been increasing more than that due to mere mistakes in the key input, with respect to the errors in total. Accordingly, by the conventional processings such as the 1 character replacement, 1 character deletion, 1 character addition, neighboring character inversion, etc., the correct word candidates can only be obtained at an extremely low accuracy.

### SUMMARY OF THE INVENTION

Accordingly, an essential object of the present invention is to provide a documentation machine provided with a spelling correction feature, which is so arranged as to supply correct candidate words at a higher accuracy by referring to a segmentation table memorizing the correct candidate words so as to correspond to input data of characters or character rows to be mis-read.

Another important object of the present invention is to provide a documentation machine of the above described type, which is capable of supplying the correct candidate words at a still higher accuracy by exchanging input data of the wrong characters or character rows different in spelling although resembling in pronunciation.

In accomplishing these and other objects, the present invention provides a documentation machine with a spelling correction feature which includes input means for inputting the spelling of an input word; dictionary means for storing the spelling of a plurality of words, said dictionary means being responsive to said input means to output the spelling of the input word; and correct table means for storing with relation one or more possibly erroneous letters inputted and the correct spelling of the input word, said correct table means being operated to output a correct candidate of the spelling by conducting a correction procedure including replacement and/or addition of one or more letters of the input word for an unknown spelling of the input word.

More specifically, according to one aspect of the present invention, there is provided a documentation machine with a spelling correction feature, which comprises a memory device for storing character information applied from an input device, a dictionary device having a main dictionary region and a segmentation table which memorizes correct word candidates to correspond to input data of characters or character rows to be mis-read, and a control device which is so arranged that, through judgement whether or not the character row stored in said memory device is present in the main dictionary, in the presence thereof in said main dictionary, it outputs said character row to an output device, while in the absence thereof in said main dictionary, effecting any one of or combination of four processings of one character substitution, one character deletion, one character addition and neighboring character inversion to judge whether or not the character row after the processing is present in the main dictionary, and if said character row after said processing is present in said main dictionary, outputs the character row after the processing to the output device, while in the absence of the character row after the processing in said main dictionary, decomposing said character row so that in the case where the character or character code after the decomposition coincides with the character or character row to be mis-read in the segmentation table, said control device exchanges said character or character row with correct candidate word to judge whether or not the character row after the exchanging is present in the main dictionary, and in the presence of the character row in said main dictionary, outputs said character row to the output device.

In another aspect of the present invention, there is also provided a documentation machine with a spelling correction feature, which comprises a memory device for storing character information applied from an input device, a dictionary device at least having a main dictionary region and a pronunciation approximate information table which memorizes, to correspond to characters or character rows constituting words, approximate pronunciation data which are of characters or character rows approximate to said characters or character rows in pronunciation, and a control device which is so arranged that, through judgement whether or not the character row stored in said memory device is present in the main dictionary, in the presence thereof in said main dictionary, it outputs said character row to an output device, while in the absence thereof in said main dictionary, effecting any one of or combination of four processings of one character substitution, one character deletion, one character addition and neighboring character inversion to judge whether or not the character row after the processing is present in the main dictionary, and if said character row after said processing is present in said main dictionary, outputs the character row after the processing to the output device, while in the absence of the character row after the processing in said main dictionary, decomposing said character row so that in the case where the character or character code after the decomposition coincides with the character or character row in said pronunciation approximation information table, said control device exchanges said character or character row with approximate pronunciation data.

By arrangements according to the present invention as described above, an improved documentation machine with a spelling correction function has been advantageously presented through simple construction.

## BRIEF DESCRIPTION OF THE DRAWINGS

These and other objects and features of the present invention will become apparent from the following description taken in conjunction with the preferred embodiment thereof with reference to the accompanying drawings, in which:

Fig. 1 is a block diagram showing a general construction of a documentation machine with a spelling correction feature according to one preferred embodiment of the present invention;

Fig. 2 is a flow-chart for explaining correcting processing in the machine of Fig. 1;

Figs. 3 and 4 are diagrams for explaining segmentation tables for the machine of Fig. 1;

Figs. 5, 6 and 7 are diagrams for explaining pronunciation approximation information tables in the machine of Fig. 1;

Fig. 8(a) is a flow-chart similar to Fig. 2, which particularly relates to an example of a specific word; and

Fig. 8(b) is a diagram showing group frames for a, ai and i as related to the flow-chart of Fig. 8-(a).

## DETAILED DESCRIPTION OF THE INVENTION

Before the description of the present invention proceeds, it is to be noted that like parts are designated by like reference numerals throughout the accompanying drawings.

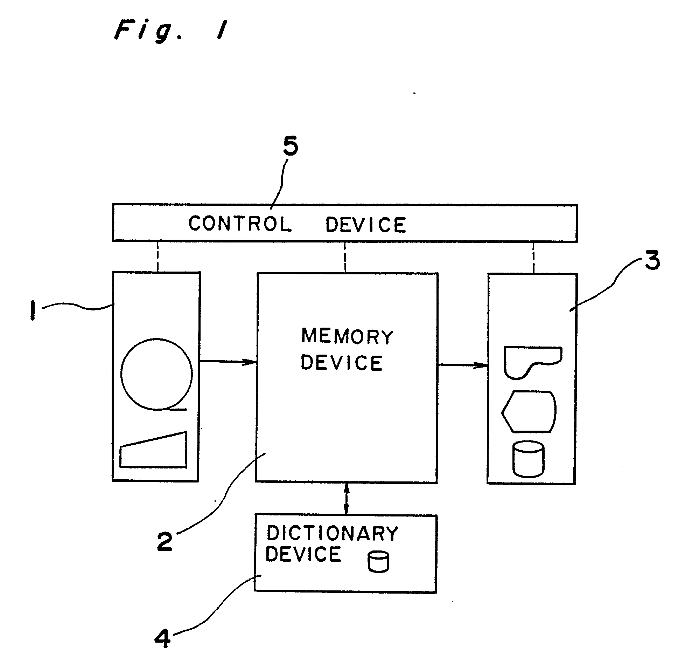

Referring now to the drawings, there is shown in Fig. 1 a block diagram showing a fundamental construction of a documentation machine or European language processing machine with a spelling correction feature according to one preferred embodiment of the present invention, which generally includes an input device 1 in the form of a keyboard, tablet device, optical input device such as an optical character reader (OCR), magnetic tape, verbal input device or the like for inputting word information data in the European language, e.g., in English, a memory device 2 such as a core memory, IC memory, magnetic disc or the like, connected with the input device 1 for storing character information inputted from said input device 1, an output device 3 in the form, for example, of a printer, display unit, magnetic tape, magnetic disc or the like, coupled with the memory device 2 for outputting character word data after editing, stored in said memory device 2, a dictionary device 4 connected to the memory device 2 and having a main dictionary region, a user dictionary region and a segmentation table for supplying useful information with respect to inquiry of spelling information for characters and word data stored in said memory device 2, and a control device 5 constituted, for example, by a computer and coupled with said input device 1, memory device 2, output device 3 and dictionary device 4 for controlling transmission and reception of signals therebetween, and also for effecting correcting processing of character rows for the input words to be described later.

The segmentation table referred to above memorizes characters or character rows of correct candidates to correspond to input data of characters or character rows to be mis-read.

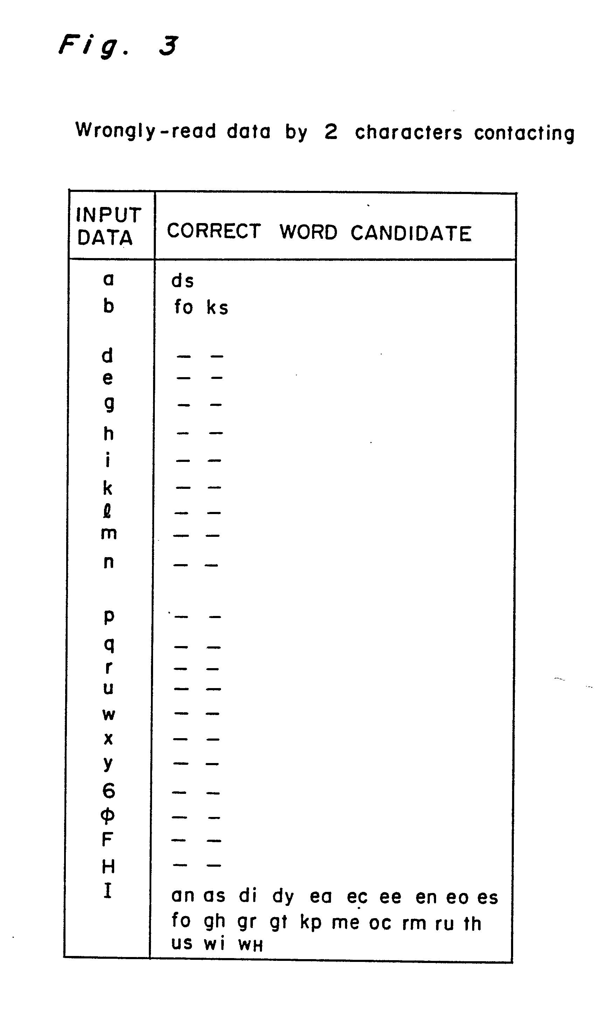

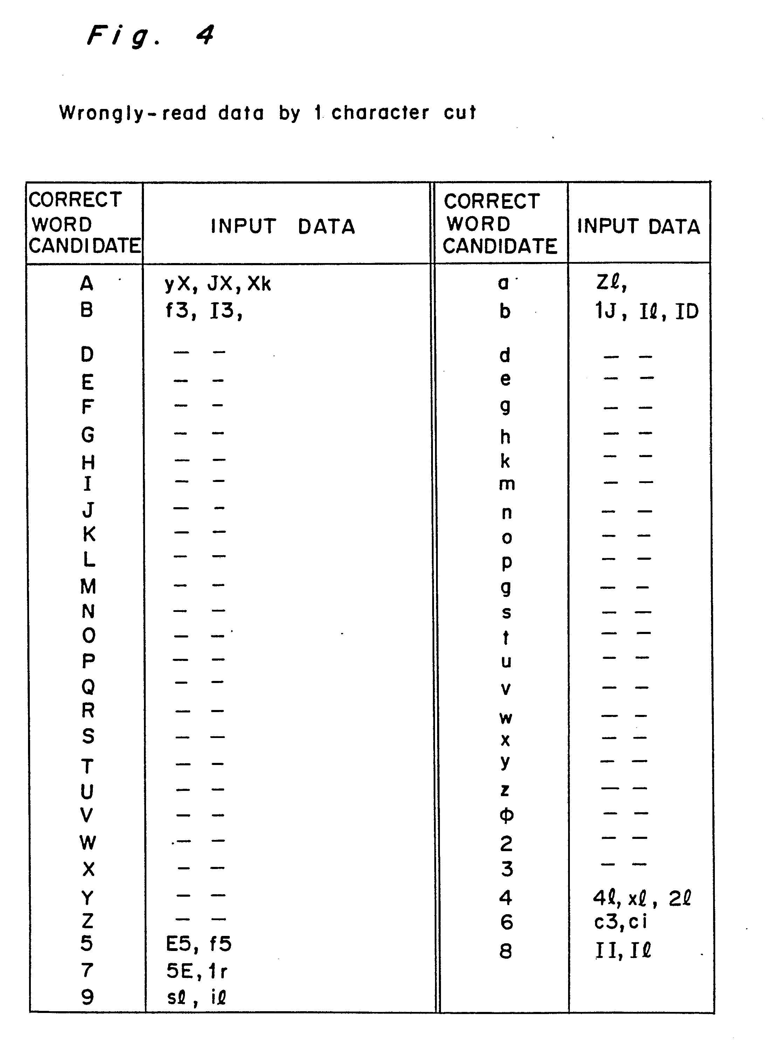

More specifically, Fig. 3 shows a segmentation table in which the correct candidate characters are adapted to correspond to 2 character contacting, incorrectly-read or mis-read data (input data), while Fig. 4 represents another segmentation table in which the correct candidate characters are arranged to correspond to incorrectly-read or mis-read data (input data) due to 1 character cut.

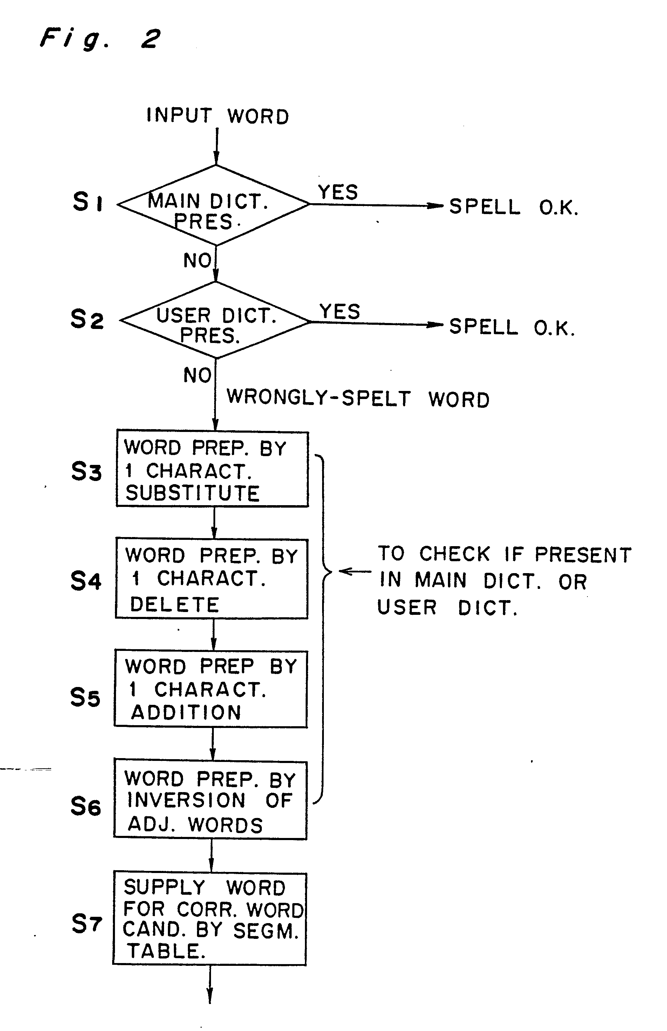

Referring also to Fig. 2, there is shown a flowchart for explaining the correcting processing of the documentation machine with the spelling correction feature according to the present invention as described so far.

In the first place, at steps S1 and S2, it is checked whether or not the character row of the input words is present in the main dictionary and the user dictionary. In the above case, the dictionary structure may be of any of known methods such as the method employing Hash practice, method using the branch system, and the dictionary constructing method of the old Word Star of Micro Pro Co. (i.e., the method based on the two-dimensional index in which capital letter data are laterally arranged in the order of A to Z, with the character numbers constituting the words being vertically arranged), etc. In the case where the character row is present in the main dictionary or the user dictionary, the character row is regarded as correct and stored in the memory device 2 so as to be further outputted from the output device 3. When the character row is not registered in such main dictionary or user dictionary, the procedure proceeds to steps S3, S4, S5 and S6 to effect the four processings as described earlier.

More specifically, for correct spelling candidates from the constitutional elements $C = C_1...C_i...C_l$ for the word length $l$, it is checked whether or not the fresh word which can be newly derived by the following processings is present in the main dictionary or user dictionary, and if said word is present therein, the coinciding word is stored in the memory device 2.

(1) 1 character substitution:

Replacement of the character $C_i$ located at position i, $1 \leq i \leq l$ by $C^*$ other than that

(2) 1 character deletion:

Removal of the character $C_i$ located at position i, $1 \leq i \leq l$

(3) 1 character addition:

Insertion of imaginary character $C^*$ between position i and i + 1, and $0 \leq i \leq l$

(4) Neighboring character inversion:

Inversion of $C_i$, $C_i + 1$ located at position i and i + 1, and $1 \leq i \leq l-1$

Statistic figures shows that correction percentage in the order of eighty % may be achieved for the correction of incorrectly-spelled words by the processings up to this stage, but misspelling percentage in the order of ten-odd % is still taking place. Therefore, at step S7, by referring to segmentation tables shown in Figs. 3 and 4 in addition to the above four processings, correct candidate words at a still higher accuracy may be supplied. In each of these segmentation tables, the character row constituting the word is decomposed, and in the case of the same character row as that registered in said segmentation table, a fresh correct word candidate is presented through replacement with the candidate character row provided thereafter. Then, it is checked whether or not the word is the same as that in the main dictionary or user dictionary, and upon coincidence, the word is supplied to the memory device 2 and output device 3 as a correct word candidate. In the manner as described so far, correct words at higher accuracy may be supplied.

It is to be noted here that in the segmentation tables as shown in Figs. 3 and 4, patterns overlapping those of the conventional four processings are omitted.

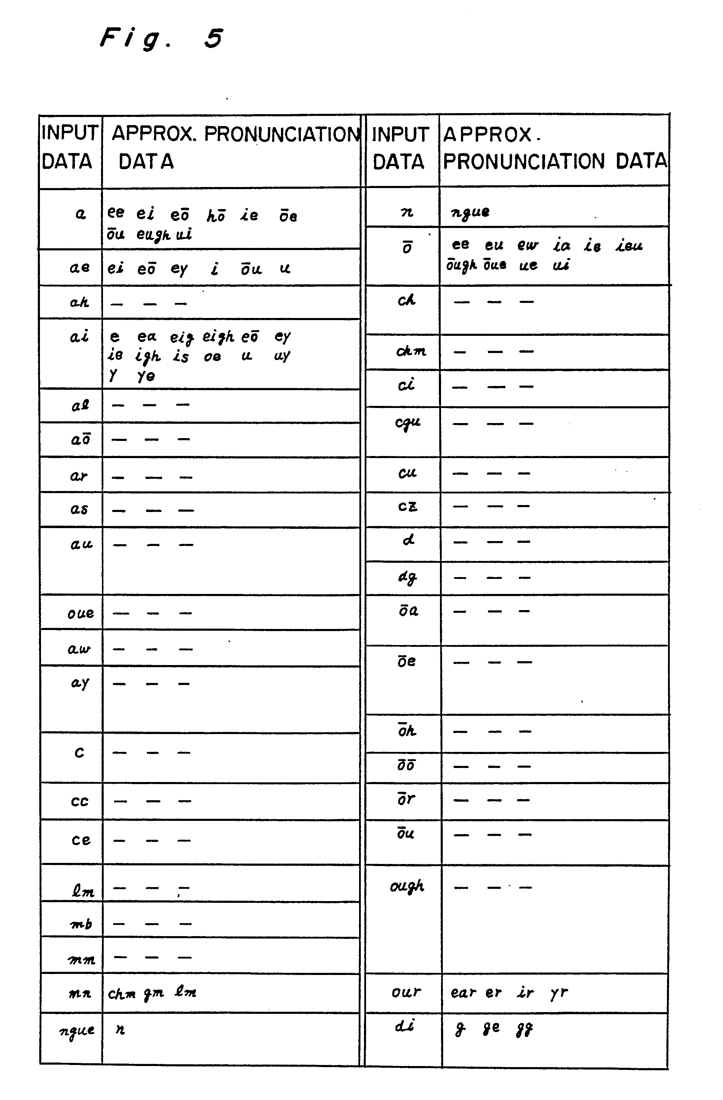

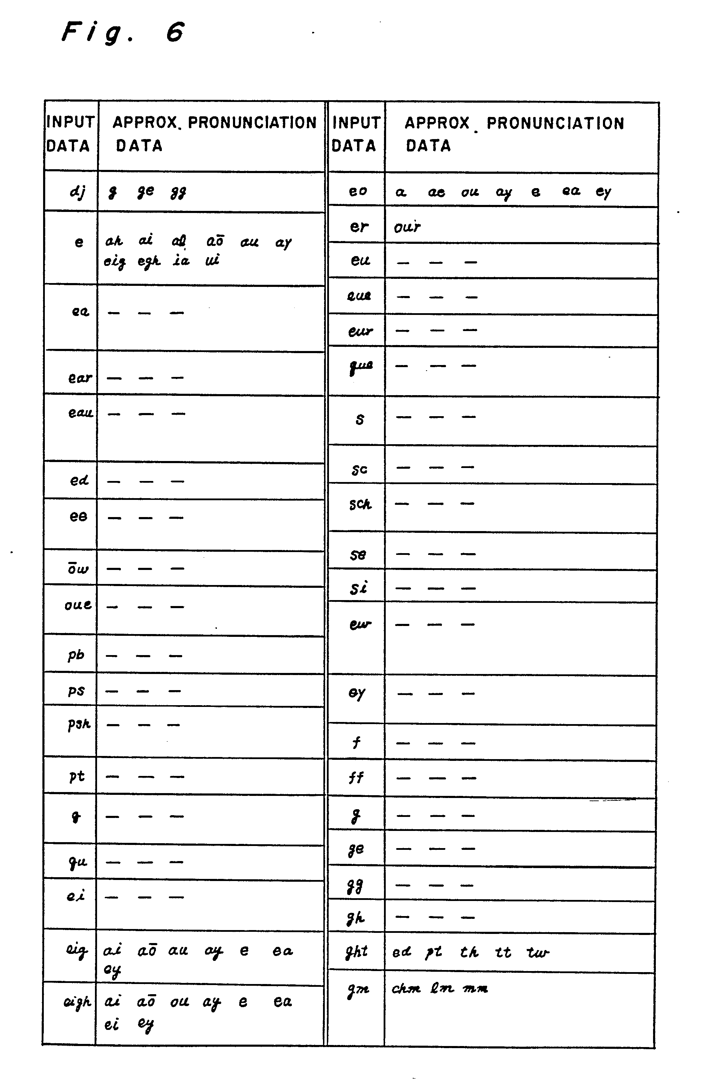

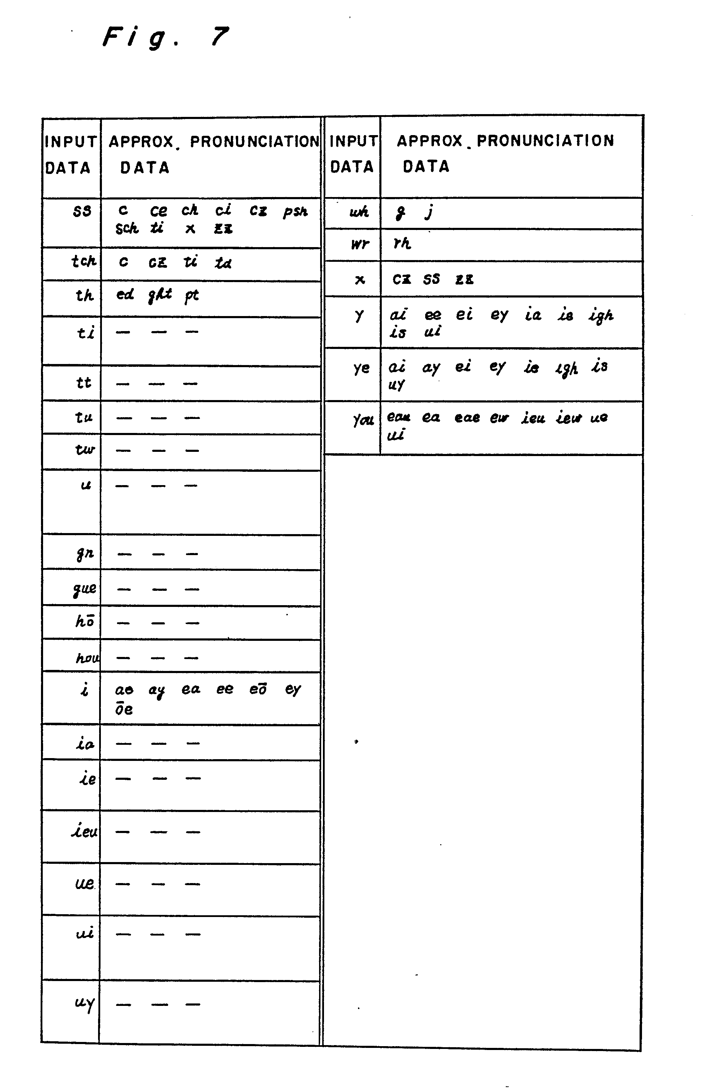

As other modifications of the segmentation tables shown in Figs. 3 and 4, there may be employed pronunciation approximation information tables or pronunciation-similarity tables as given in Figs. 5, 6 and 7.

Each of the tables shown in Figs. 5, 6 and 7 memorizes, so as to correspond to characters or character rows constituting words, approximate pronunciation data which are of characters or character rows approximate, in pronunciation, to said characters or character rows which constitute the words. In other words, in the pronunciation approximation information tables as described above, it is not so arranged as to add pronunciation information to each word, but character rows likely to become the same pronunciation due to arrangement of the character rows constituting the word, are formed into groups. In the case where the input word is in error (i.e., misspelling), the character row constituting the input word is decomposed to be replaced by the candidate character row tending to be of the similar pronunciation in the same case as in the character row registered in the table for providing a fresh candidate word.

In the flow-chart in Fig. 2 for the correcting processing of the documentation machine with a spelling correction feature referred to earlier, by proceeding successively from step S1 to step S7, referring to the pronunciation approximation information tables in Figs. 5, 6 and 7 in addition to the four processings described earlier, correct candidate words at a still higher accuracy may be supplied.

In each of these pronunciation approximation information tables, the character row constituting the word is decomposed, and in the case where the character row registered in the table and input data are of the same character row, replacement is made with the approximate pronunciation data provided thereafter, i.e, candidate row, so as to present a fresh correct word candidate.

By way of example, to represent [ju:] (phonetic symbol) in the pronunciation of Japanese, there are so many character rows such as eau(beautiful), eu-(feud), eue(queue), ew(pew), iew(adieu), iew(view), ue(cue), ui(suit), you(you), and yu(yule), etc., with different spelling but the same or almost the same in pronunciation, which can not be fully covered by the processings (1) to (4) described earlier. Therefore, the processings as described earlier are effected by the pronunciation approximation information tables. It is checked whether or not the correct word candidate thus obtained is the same as the word present in the main dictionary or user dictionary, and if they are in agreement, the word is supplied to the memory device 2 as a correct word candidate, thereby providing the correct word at high accuracy.

It is to be noted here that in the pronunciation approximation information tables shown in Figs. 5, 6 and 7, patterns overlapping the conventional four processings are omitted.

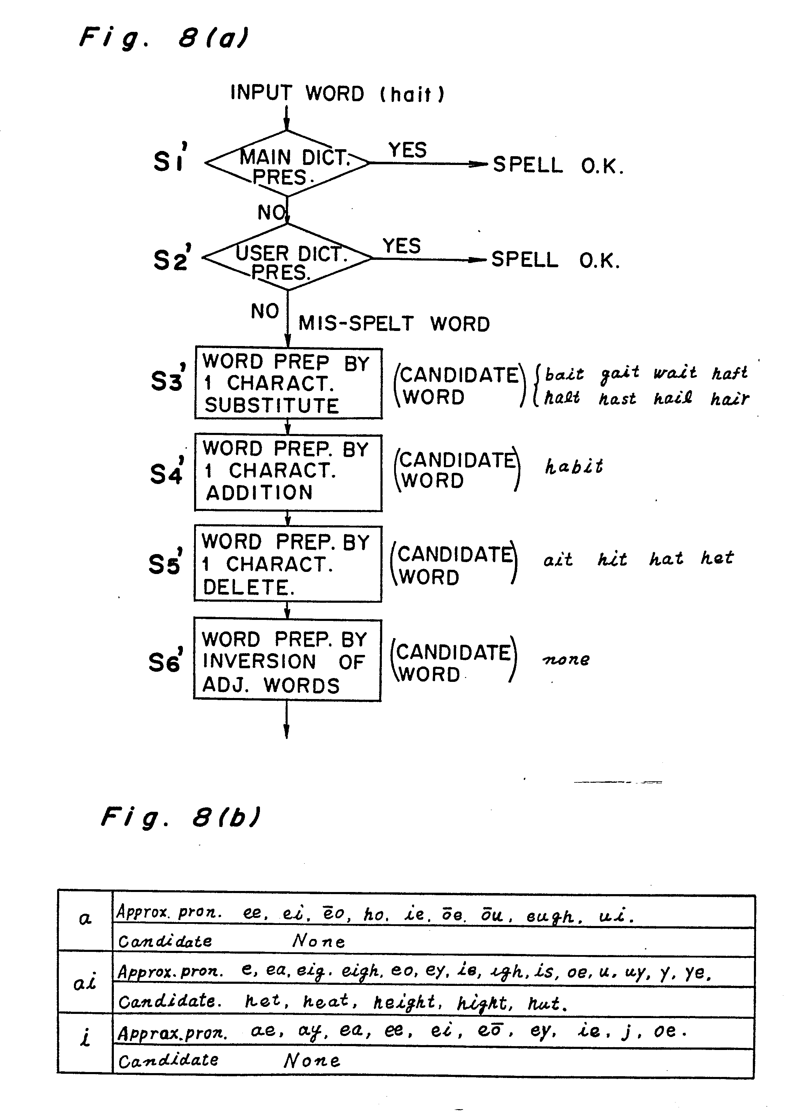

Meanwhile, in the case of a word "height", for example, it is represented by a phonetic symbol [hait], and thus, there may be a case where the word "height" is written as "hait", as it is pronounced. on this case, the spell checking and correcting work are effected in the manner as shown in a flow-chart of Fig. 8(a) from step S1' to S6' As shown in Fig. 8(b), in the case of "hait", the group frames are represented by three frames for a, ai and i.

More specifically, by the pronunciation approximation information table, the input word "hait" is decomposed into h, a, i, t, ha, hoi, ai, it, etc., and the character rows having the same constitutional character row as the table data are searched for.

The group frames for a, ai and i are referred to by the table so as to replace the respective approximate pronunciation characters thereof, and thus, het, heat, height, hight, and hut are to be added to the correct candidates. By actually replacing the approximate pronunciation character row for checking by the main dictionary and user dictionary, the words which become okay for the spelling are kept remaining.

As is clear from the foregoing description, in the documentation machine with a spelling correction feature of the present invention, since it is so arranged to find the correct candidate word for supplying, by referring to the segmentation table which memorizes the correct candidate to correspond to the characters or character rows to be misread, in addition to the conventional four processings for 1 character substitution, 1 character deletion, 1 character addition and neighboring character inversion, it becomes possible to markedly improve the accuracy for the word to be supplied from the dictionary.

Furthermore, according to the documentation machine of the present invention, owing to the arrangement that, in the case where the input word has misspelling, reference is made to the pronunciation approximation information table and the correct candidate word is searched for and supplied by exchanging the incorrectly spelled character row with a character row resembling in pronunciation, but different in spelling, the word to be supplied from the dictionary can also be improved in accuracy to a large extent.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

**Claims**

1. A documentation machine with a spelling correction feature comprising:
    input means (1) for inputting the spelling of an input word;
    dictionary means (4) for storing the spelling of a plurality of words, said dictionary means (4) being responsive to said input means to output the spelling of the input word; and

correct table means for storing with relation one or possibly erroneous letters inputted and the correct spelling of the input word, said correct table means being operated to output a correct candidate of the spelling by conducting a correction procedure including replacement and/or addition of one or more letters to the input word for an unknown spelling of the input word.

2. The documentation machine of Claim 1, wherein said input means (1) comprises optical reading means for optically reading the spelling of the word and said correct table means stores the plurality of words the spelling of which is similar.

3. The documentation machine of Claim 1, wherein said input means (1) comprises voice synthesizer means for verbally inputting the input word and said correct table means stores the plurality of words the pronunciation of which is similar.

4. The documentation machine of Claim 1, wherein said documentation machine is a word processor.

5. The documentation machine of Claim 1, wherein said documentation machine is a typewriter.

6. A documentation machine with a spelling correction feature comprising:

optical input means (1) for optically inputting the spelling of an input word;

dictionary means (4) for storing the spelling of a plurality of words, said dictionary means being responsive to said input means to output the spelling of the input word; and

segmentation table means for storing with relation one or more possibly erroneous letters read-in and the correct spelling of the input word, said segmentation table means being operated to output a correct candidate of the spelling by conducting a correction procedure including replacement and/or addition of one or more letters of the input word for an unknown spelling of the input word.

7. A documentation machine with a spelling correction feature comprising: .

verbal-input means (1) for verbally inputting the spelling of an input word;

dictionary means (4) for storing the spelling of a plurality of words, said dictionary means (4) being responsive to said input means to output the spelling of the input word; and

pronunciation-similarity table means for storing with relation one or more possibly erroneous letters verbally inputted and the correct spelling of the input word, said pronunciation-similarity table means being operated to output a correct candidate of the spelling by conducting a correction procedure including replacement and/or addition of one or more letters of the input word for an unknown spelling of the input word.

8. A documentation machine with a spelling correction feature, which comprises a memory device (2) for storing character information applied from an input device (1), a dictionary device (4) having a main dictionary region and a segmentation table which memorizes correct word candidates to correspond to input data of characters or character rows to be mis-read, and a control device (5) which is so arranged that, through judgement whether or not the character row stored in said memory device (2) is present in the main dictionary, in .the presence thereof in said main dictionary, it outputs said character row to an output device (3), while in the absence thereof in said main dictionary, effecting any one of or combination of four processings of one character substitution, one character deletion, one character addition and neighboring character inversion to judge whether or not the character row after the processing is present in the main dictionary, and if said character .row after said processing is present in said main dictionary, outputs the character row after the processing to the output device, while in the absence of the character row after the processing in said main dictionary, decomposing said character row so that in the case where the character or character code after the decomposition coincides with the character or character row to be mis-read in the segmentation table, said control device (5) exchanges said character or character row with correct candidate word to judge whether or not the character row after the exchanging is present in the main dictionary, and in the presence of the character row in said main dictionary, outputs said character row to the output device.

9. A documentation machine with a spelling correction feature, which comprises a memory device (2) for storing character information applied from an input device (1), a dictionary device at least having a main dictionary region and a pronunciation approximation information table which memorizes, to correspond to characters or character rows constituting words, approximate pronunciation data which are of characters or character rows approximate to said characters or character rows in pronunciation, and a control device (5) which is so arranged that, through judgement whether or not the character row stored in said memory device (2) is present in the main dictionary, in the presence thereof in said main dictionary, it outputs said character row to an output device (3), while in the absence thereof in said main dictionary, effecting any one of or combination of four processings of one character substitution, one character deletion, one character addition and neighboring character inversion to judge whether or not the character row after the processing is present in the main dictionary, and if said character row after said processing is present in said main dictionary, outputs the character row after the processing to the output device, while in the absence of the character row after the processing in said main dictionary, decomposing said character row so that in the case where the character or character code after the decomposition coincides with the character or character row in said pronunciation approximation information table, said control device (5) exchanges said character or character row with approximate pronunciation data.

# Fig. 1

*Fig. 2*

INPUT WORD

**S1** MAIN DICT. PRES. — YES → SPELL O.K.

NO

**S2** USER DICT. PRES. — YES → SPELL O.K.

NO   WRONGLY-SPELT WORD

**S3** WORD PREP. BY 1 CHARACT. SUBSTITUTE

**S4** WORD PREP. BY 1 CHARACT. DELETE

**S5** WORD PREP BY 1 CHARACT. ADDITION

**S6** WORD PREP. BY INVERSION OF ADJ. WORDS

TO CHECK IF PRESENT IN MAIN DICT. OR USER DICT.

**S7** SUPPLY WORD FOR CORR. WORD CAND. BY SEGM. TABLE.

# Fig. 3

Wrongly-read data by 2 characters contacting

| INPUT DATA | CORRECT WORD CANDIDATE |
|---|---|
| a | ds |
| b | fo ks |
| d | — — |
| e | — — |
| g | — — |
| h | — — |
| i | — — |
| k | — — |
| ℓ | — — |
| m | — — |
| n | — — |
| p | — — |
| q | — — |
| r | — — |
| u | — — |
| w | — — |
| x | — — |
| y | — — |
| 6 | — — |
| Φ | — — |
| F | — — |
| H | — — |
| I | an as di dy ea ec ee en eo es fo gh gr gt kp me oc rm ru th us wi wH |

## Fig. 4

Wrongly-read data by 1 character cut

| CORRECT WORD CANDIDATE | INPUT DATA | CORRECT WORD CANDIDATE | INPUT DATA |
|---|---|---|---|
| A | yX, JX, Xk | a | $Z\ell$, |
| B | f3, I3, | b | 1J, $I\ell$, ID |
| D | — — | d | — — |
| E | — — | e | — — |
| F | — — | g | — — |
| G | — — | h | — — |
| H | — — | k | — — |
| I | — — | m | — — |
| J | — — | n | — — |
| K | — — | o | — — |
| L | — — | p | — — |
| M | — — | g | — — |
| N | — — | s | — — |
| O | — — | t | — — |
| P | — — | u | — — |
| Q | — — | v | — — |
| R | — — | w | — — |
| S | — — | x | — — |
| T | — — | y | — — |
| U | — — | z | — — |
| V | — — | φ | — — |
| W | — — | 2 | — — |
| X | — — | 3 | — — |
| Y | — — | 4 | $4\ell$, $x\ell$, $2\ell$ |
| Z | — — | 6 | c3, ci |
| 5 | E5, f5 | 8 | II, $I\ell$ |
| 7 | 5E, 1r | | |
| 9 | $s\ell$, $i\ell$ | | |

0 257 641

# Fig. 5

| INPUT DATA | APPROX. PRONUNCIATION DATA | | | | | | INPUT DATA | APPROX. PRONUNCIATION DATA | | | | |
|---|---|---|---|---|---|---|---|---|---|---|---|---|
| a | ee | ei | eō | hō | ie | ōe | n | ngue | | | | |
| | ōu | eugh | ui | | | | ō | ee | eu | ew | ia | ie ieu |
| ae | ei | eō | ey | i | ōu | u | | ōugh | ōue | ue | ui | |
| ah | — | — | — | | | | ch | — | — | — | | |
| ai | e | ea | eig | eigh | eō | ey | chm | — | — | — | | |
| | ie | igh | is | oe | u | uy | ci | — | — | — | | |
| | y | ye | | | | | cgu | — | — | — | | |
| al | — | — | — | | | | | | | | | |
| aō | — | — | — | | | | cu | — | — | — | | |
| ar | — | — | — | | | | cz | — | — | — | | |
| as | — | — | — | | | | d | — | — | — | | |
| au | — | — | — | | | | dg | — | — | — | | |
| oue | — | — | — | | | | ōa | — | — | — | | |
| aw | — | — | — | | | | ōe | — | — | — | | |
| ay | — | — | — | | | | | | | | | |
| | | | | | | | ōh | — | — | — | | |
| c | — | — | — | | | | ōō | — | — | — | | |
| cc | — | — | — | | | | ōr | — | — | — | | |
| ce | — | — | — | | | | ōu | — | — | — | | |
| lm | — | — | — | | | | ough | — | — | — | | |
| mb | — | — | — | | | | | | | | | |
| mm | — | — | — | | | | | | | | | |
| mn | chm | gm | lm | | | | our | ear | er | ir | yr | |
| ngue | n | | | | | | di | g | ge | gg | | |

# Fig. 6

| INPUT DATA | APPROX. PRONUNCIATION DATA | INPUT DATA | APPROX. PRONUNCIATION DATA |
|---|---|---|---|
| dj | ʒ ʒe ʒʒ | eo | a ae ou ay e ea ey |
| e | ah ai aḷ aō au ay eig egh ia ui | er | our |
|  |  | eu | — — — |
| ea | — — — | eue | — — — |
|  |  | eur | — — — |
| ear | — — — | que | — — — |
| eau | — — — | s | — — — |
| ed | — — — | sc | — — — |
| ee | — — — | sch | — — — |
| ōw | — — — | se | — — — |
| oue | — — — | si | — — — |
|  |  | eur | — — — |
| pb | — — — |  |  |
| ps | — — — | ey | — — — |
| psh | — — — | f | — — — |
| pt | — — — | ff | — — — |
| q | — — — | g | — — — |
| qu | — — — | ge | — — — |
| ei | — — — | gg | — — — |
|  |  | gh | — — — |
| eig | ai aō au ay e ea ey | ght | ed pt th tt tw |
| eigh | ai aō ou ay e ea ei ey | gm | chm lm mm |

# Fig. 7

| INPUT DATA | APPROX. PRONUNCIATION DATA | | | | | | INPUT DATA | APPROX. PRONUNCIATION DATA | | | | | | |
|---|---|---|---|---|---|---|---|---|---|---|---|---|---|---|
| ss | c | ce | ch | ci | cz | psh | wh | g | j | | | | | |
| | sch | ti | x | zz | | | wr | rh | | | | | | |
| tch | c | cz | ti | ta | | | x | cz | ss | zz | | | | |
| th | ed | ght | pt | | | | y | ai | ee | ei | ey | ia | is | igh |
| ti | — | — | — | | | | | is | ui | | | | | |
| tt | — | — | — | | | | ye | ai | ay | ei | ey | is | igh | is |
| tu | — | — | — | | | | | uy | | | | | | |
| tw | — | — | — | | | | you | eau | ea | eae | ew | ieu | iew | ue |
| u | — | — | — | | | | | ui | | | | | | |
| gn | — | — | — | | | | | | | | | | | |
| gue | — | — | — | | | | | | | | | | | |
| hō | — | — | — | | | | | | | | | | | |
| hou | — | — | — | | | | | | | | | | | |
| i | ae | ay | ea | ee | eō | ey | | | | | | | | |
| | ōe | | | | | | | | | | | | | |
| ia | — | — | — | | | | | | | | | | | |
| ie | — | — | — | | | | | | | | | | | |
| ieu | — | — | — | | | | | | | | | | | |
| ue | — | — | — | | | | | | | | | | | |
| ui | — | — | — | | | | | | | | | | | |
| uy | — | — | — | | | | | | | | | | | |

## Fig. 8(a)

INPUT WORD (hait)

S1' MAIN DICT. PRES. — YES → SPELL O.K.

NO

S2' USER DICT. PRES. — YES → SPELL O.K.

NO | MIS-SPELT WORD

S3' | WORD PREP BY 1 CHARACT. SUBSTITUTE | (CANDIDATE WORD) { bait gait wait haft / halt hast hail hair

S4' | WORD PREP. BY 1 CHARACT. ADDITION | (CANDIDATE WORD) habit

S5' | WORD PREP. BY 1 CHARACT. DELETE. | (CANDIDATE WORD) ait hit hat het

S6' | WORD PREP. BY INVERSION OF ADJ. WORDS | (CANDIDATE WORD) none

## Fig. 8(b)

| | | |
|---|---|---|
| a | Approx. pron. ee, ei, ēo, ho, ie, ōe, ōu, eugh, ui. | |
| | Candidate None | |
| ai | Approx. pron. e, ea, eig, eigh, eo, ey, ie, igh, is, oe, u, uy, y, ye. | |
| | Candidate. het, heat, height, hight, hut. | |
| i | Approx. pron. ae, ay, ea, ee, ei, eō, ey, ie, j, oe. | |
| | Candidate None | |